(19) **Europäisches Patentamt / European Patent Office / Office européen des brevets**

(11) **EP 4 206 927 A1**

(12) **EUROPEAN PATENT APPLICATION**
published in accordance with Art. 153(4) EPC

(43) Date of publication:
**05.07.2023 Bulletin 2023/27**

(21) Application number: **21868257.3**

(22) Date of filing: **19.07.2021**

(51) International Patent Classification (IPC):
**G06F 11/07** (2006.01)

(52) Cooperative Patent Classification (CPC):
**G06F 11/07; H04L 41/0631; H04L 41/0677**

(86) International application number:
**PCT/CN2021/107015**

(87) International publication number:
**WO 2022/057428 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 CN 202010986439**

(71) Applicant: **Huawei Technologies Co., Ltd.**
**Shenzhen, Guangdong 518129 (CN)**

(72) Inventors:
• **TIAN, Zhiyong**
  **Shenzhen, Guangdong 518129 (CN)**
• **XIE, Qing**
  **Shenzhen, Guangdong 518129 (CN)**
• **WANG, Jiyu**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD AND APPARATUS FOR DETERMINING ROOT CAUSE OF FAULT, AND RELATED DEVICE**

(57) Embodiments of this application disclose a method for determining a fault root cause, which may be applied to the field of information technologies. The method includes: obtaining first fault information, where the first fault information includes M alarms, and M is an integer greater than or equal to 1; determining, from N pieces of known fault information based on the M alarms, at least one piece of known fault information that matches the first fault information, where each of the N pieces of known fault information includes a plurality of alarms; and determining, based on a fault root cause of the at least one piece of known fault information, information related to a root cause of the first fault information. The root cause of the first fault information is determined by using the known fault information that matches the first fault information, so that work difficulty of operation and maintenance personnel can be reduced, and troubleshooting efficiency is improved.

FIG. 8

## Description

This application claims priority to Chinese Patent Application No. 202010986439.1, filed on September 18, 2020 and entitled "METHOD AND APPARATUS FOR DETERMINING FAULT ROOT CAUSE AND RELATED DEVICE ", which is incorporated herein by reference in its entirety.

## TECHNICAL FIELD

This application relates to the field of information technologies, and in particular, to a method and apparatus for determining a fault root cause, and a related device.

## BACKGROUND

With expansion of a network scale and an increase in various network devices, a large number of alarms of various types are generated on these network devices. This causes great pressure to an operations support system (operations support system, OSS).

In addition to the foregoing causes, there are a plenty of unnecessary alarms such as invalid alarms and repeated alarms in the large number of alarms. Operation and maintenance personnel cannot accurately identify a fault root cause from the large number of alarms. As a result, troubleshooting efficiency is low, a large number of invalid dispatched orders are generated, labor is wasted, and operation and maintenance costs are high. To improve the troubleshooting efficiency, a system classifies events based on a time correlation, a topology correlation, and the like, to obtain small alarm event sets, which are also referred to as situations. In addition, a topology graph of the alarm event sets is displayed to improve visibility of the alarm event sets and help the operation and maintenance personnel analyze root causes. After determining a root cause, the operation and maintenance personnel can mark the root cause in the topology graph and dispatch an order based on the mark.

Although marking the root cause in the topology improves the troubleshooting efficiency of the operation and maintenance personnel, each of the operation and maintenance personnel should have professional technical knowledge, which further restricts improvement of the troubleshooting efficiency.

## SUMMARY

This application provides a method and apparatus for determining a fault root cause, and a related device, to improve troubleshooting efficiency.

A first aspect of this application provides a method for determining a fault root cause.

The method includes: A device for obtaining a fault root cause obtains first fault information. The first fault information includes M alarms, and M is an integer greater than or equal to 1. For ease of description, the device for determining a fault root cause is referred to as a first device below. After obtaining the first fault information, the first device determines, from N pieces of known fault information based on the M alarms, at least one piece of known fault information that matches the first fault information. Each of the N pieces of known fault information includes a plurality of alarms, and N is an integer greater than or equal to 2. In addition, the first device further determines, based on a fault root cause of the at least one piece of known fault information, information related to a root cause of the first fault information.

The root cause of the first fault information is determined by using the known fault information that matches the first fault information, so that work difficulty of operation and maintenance personnel can be reduced, and the troubleshooting efficiency is improved.

In an optional design of the first aspect, the first device determines, based on the M alarms in the first fault information and P alarms in first known fault information, a first similarity between the first fault information and the first known fault information. The first known fault information is included in the N pieces of known fault information, and P is an integer greater than or equal to 1. The first device further calculates, based on a method for determining the first similarity, N-1 similarities between the first fault information and each of remaining N-1 pieces of known fault information in the N pieces of known fault information. The first device determines, based on the first similarity and the N-1 similarities, at least one piece of known fault information that matches the first fault information. The fault information that matches the first fault information is determined by using the N similarities, so that matching accuracy can be improved, and accuracy of the determined information related to the root cause of the first fault information can be improved.

In an optional design of the first aspect, the first device obtains a first vector set corresponding to the first fault information. The first vector set includes M first vectors, the M first vectors are in a one-to-one correspondence with the M alarms, and some or all features of each of the M first vectors are used to represent impact of one of the M alarms on a network and/or a cause for generating the alarm. The first device obtains the first similarity between the first vector set and a second vector set. The second vector set includes P second vectors, and the P second vectors are in a one-to-one correspondence with the P alarms. When fault root causes in the two fault event sets are the same, impact of the two fault event sets on the network and/or causes for generating the fault event sets should be similar. The first vector set reflects impact of the first fault information on the network and/or a cause for generating the fault information. The second vector set reflects impact of fault information corresponding to the P alarms on the network and/or a cause for generating the fault information. Therefore, the first similarity is calculated by using the first vector set and the second vector set, so that the accuracy of the determined information related to the root cause of the first fault information can be improved.

In an optional design of the first aspect, the at least one piece of known fault information that matches the first fault information is known fault information that is of the N pieces of known fault information and that is most similar to the first fault information; or the at least one piece of known fault information that matches the first fault information is at least one piece of known fault information that is of the N pieces of known fault information and whose similarity to the first fault information exceeds a predetermined value. According to the foregoing method, the operation and maintenance personnel do not need to view the N pieces of known fault information each time, thereby simplifying an operation of the operation and maintenance personnel and improving efficiency of determining a fault root cause. In an optional design of the first aspect, the first device determines, based on the fault root cause of the at least one piece of known fault information, the root cause of the first fault information; or the first device determines, based on the fault root cause of the at least one piece of known fault information, whether an entity related to an alarm in the first fault information is the root cause of the first fault information.

In an optional design of the first aspect, a type of an alarm corresponding to the fault root cause of the at least one piece of known fault information is the same as a type of an alarm corresponding to the root cause of the first fault information. When the first fault information includes only one alarm of the same type as the alarm corresponding to the fault root cause of the at least one piece of known information, it may be determined that an entity device corresponding to the alarm is the root cause of the first fault information. Therefore, a topology graph corresponding to the first fault information does not need to be analyzed, and a process of obtaining a root cause is simplified.

In an optional design of the first aspect, when the at least one piece of known fault information that matches the first fault information is a plurality of pieces of known fault information, the first device determines a plurality of pieces of candidate information that are respectively corresponding to the plurality of pieces of known fault information and that are related to the root cause of the first fault information, displays the plurality of pieces of candidate information by using a display interface, and receives root cause selection information. The root cause selection information represents that a piece of candidate information is selected. The first device determines, from the plurality of pieces of candidate information based on the root cause selection information, the information related to the root cause of the first fault information. The plurality of pieces of candidate information are recommended for the operation and maintenance personnel to select, so that the accuracy of the determined information related to the root cause of the first fault information can be improved by using technical knowledge of the operation and maintenance personnel.

A second aspect of this application provides an apparatus for determining a fault root cause.

The apparatus includes: an obtaining module, configured to obtain first fault information, where the first fault information includes M alarms, and M is an integer greater than or equal to 1;

a first determining module, configured to determine, from N pieces of known fault information based on the M alarms, at least one piece of known fault information that matches the first fault information, where each of the N pieces of known fault information includes a plurality of alarms, and N is an integer greater than or equal to 2; and
a second determining module, configured to determine, based on a fault root cause of the at least one piece of known fault information, information related to a root cause of the first fault information.

In an optional design of the second aspect, the first determining unit is specifically configured to determine, based on the M alarms in the first fault information and P alarms in first known fault information, a first similarity between the first fault information and the first known fault information. The first known fault information is included in the N pieces of known fault information, and P is an integer greater than or equal to 1; the first determining unit is specifically configured to calculate, based on a method for determining the first similarity, N-1 similarities between the first fault information and each of remaining N-1 pieces of known fault information in the N pieces of known fault information; and the first determining unit is specifically configured to determine, based on the first similarity and the N-1 similarities, at least one piece of known fault information that matches the first fault information.

In an optional design of the second aspect, the first determining unit is specifically configured to obtain a first vector set corresponding to the first fault information. The first vector set includes M first vectors, the M first vectors are in a one-to-one correspondence with the M alarms, and some or all features of each of the M first vectors are used to represent impact of one of the M alarms on a network and/or a cause for generating the alarm; and the first determining unit is specifically configured to obtain the first similarity between the first vector set and a second vector set. The second vector set includes P first vectors, and the P first vectors are in a one-to-one correspondence with the P alarms. In an optional design of the second aspect, the at least one piece of known fault information that matches the first fault information includes: known fault information that is of the N pieces of known fault information and that is most similar to the first fault information; or at least one piece of known fault information that is of the N pieces of known fault information and whose similarity to the first fault information exceeds a predetermined value.

In an optional design of the second aspect, the second determining unit is specifically configured to determine, based on the fault root cause of the at least one piece of known fault information, the root cause of the first fault information; or the second determining unit is specifically configured to determine, based on the fault root cause of the at least one piece of known fault information, whether an entity related to an alarm in the first fault information is the root cause of the first fault information.

In an optional design of the second aspect, a type of an alarm corresponding to the fault root cause of the at least one piece of known fault information is the same as a type of an alarm corresponding to the root cause of the first fault information.

In an optional design of the second aspect, when the at least one piece of known fault information that matches the first fault information is a plurality of pieces of known fault information, the second determining unit is specifically configured to determine a plurality of pieces of candidate information that are respectively corresponding to the plurality of pieces of known fault information and that are related to the root cause of the first fault information; the second determining unit is specifically configured to receive root cause selection information; and the second determining unit is specifically configured to determine, from the plurality of pieces of candidate information based on the root cause selection information, the information related to the root cause of the first fault information.

A third aspect of this application provides a device for determining a fault root cause.

The device includes a processor and a memory. The memory stores N pieces of known fault information. The processor is configured to obtain first fault information. The first fault information includes M alarms, and M is an integer greater than or equal to 1; the processor is further configured to determine, from the N pieces of known fault information based on the M alarms, at least one piece of known fault information that matches the first fault information. Each of the N pieces of known fault information includes a plurality of alarms, and N is an integer greater than or equal to 2; and the processor is further configured to determine, based on a fault root cause of the at least one piece of known fault information, information related to a root cause of the first fault information.

A fourth aspect of this application provides a computer storage medium. The computer storage medium stores instructions, and when the instructions are executed on a computer, the computer is enabled to perform the method according to any one of the first aspect or the implementations of the first aspect.

A fifth aspect of this application provides a computer program product. When the computer program product is executed on a computer, the computer is enabled to perform the method according to any one of the first aspect or the implementations of the first aspect.

## BRIEF DESCRIPTION OF DRAWINGS

FIG. 1 is a schematic diagram of a framework according to an embodiment of this application;
FIG. 2 is a schematic flowchart of obtaining a second vector set according to an embodiment of this application;
FIG. 3 is a topology graph corresponding to second fault information according to an embodiment of this application;
FIG. 4 is a schematic diagram of a structure of a basis list according to an embodiment of this application;
FIG. 5 is a schematic flowchart of a possible cause for reporting ETH_LOS by a resource according to an embodiment of this application;
FIG. 6 is a topology graph according to an embodiment of this application;
FIG. 7 is a schematic diagram of another structure of a basis list according to an embodiment of this application;
FIG. 8 is a schematic flowchart of determining a fault root cause according to an embodiment of this application;
FIG. 9 is a schematic diagram of a structure of an apparatus for determining a fault root cause according to an embodiment of this application; and
FIG. 10 is a schematic diagram of a structure of a device for determining a fault root cause according to an embodiment of this application.

## DESCRIPTION OF EMBODIMENTS

Embodiments of this application provide a method and apparatus for determining a fault root cause, and a related device, and are applied to the field of information technologies, to improve troubleshooting efficiency. It should be noted that in the descriptions of embodiments of this application, terms such as "first" and "second" are merely used for the purpose of distinguishable descriptions, and shall not be construed as indicating or implying relative importance or construed as indicating or implying a sequence.

Some terms in this application are first described, to help a person skilled in the art have a better understanding.

(1) An alarm event set, also referred to as a situation, is obtained by aggregating, according to at least one dimension of a time correlation, a topology correlation, or a text similarity, a series of alarm events corresponding to a possible fault. For example, it is assumed that a set of original alarm events is A=[a1, a2, ..., ai], and all situations obtained after aggregation are denoted as S, and S={S 1 [a1, ..., ak], S2[at, ..., sy], ... Sr[am, ..., ai]}, where r is a quantity of situations, and $1 \leq k, t, y, m < i$, that is, each situation is a set of a series of alarm events, and the alarm event set may be obtained through aggregation, or may be determined manually. In embodiments of this application, the first fault information is a fault event set, the N pieces of known fault information is N fault event set, and the at least one piece of known fault information is at least one fault event set.

(2) An alarm name and a type are used to represent an attribute of an alarm event, and may represent a specific fault cause. Optionally, the alarm name further corresponds to a recovery operation suggestion. The alarm name may be represented by a discrete Chinese or English character string. For example, the alarm name may be ETH_LOS, MPLS_TUNNEL_LOCV, ETH_APS_LOST, TUNNEL_DOWN, or a quantity of users on an entire system falls below a minimum threshold. An alarm name corresponds to a type of alarm. For example, if both a network element 1 and a network element 2 report ETH_LOS, the two ETH_LOS alarms are considered as one type of alarm

(3) A fault root cause and a root cause. The fault root cause is used to represent a root cause alarm event in a situation. For example, a situation includes three alarms: ETH_LOS, MPLS_TUNNEL_LOCV, and ETH_APS_LOST. Among the three alarms, ETH_LOS causes generation of MPLS_TUNNEL_LOCV and ETH_APS_LOST. After the cause for generating ETH_LOS is solved, MPLS_TUNNEL_LOCV and ETH_APS_LOST are cleared. In this case, ETH_LOS is the fault root cause of the situation. The root cause is a problem generated by an entity device corresponding to the fault root cause. For example, the root cause corresponding to ETH_LOS may be that an optical fiber 1 is disconnected. For ease of description, ETH_LOS is sometimes referred to as corresponding to the optical fiber 1. During actual application, there is a situation in which a root cause exists, but no fault root cause exists. For example, a specific network element fails to report an alarm even if the network element is faulty. According to the method for determining a fault root cause in embodiments of this application, the root cause can also be determined in this case. This will be described in detail in subsequent descriptions.

(4) An alarm severity level is used to represent an emergency level of an alarm event, and may be represented by using a Chinese character string or an English character string. For example, when being represented by using Chinese character strings, the alarm severity levels may be five levels: critical, major, minor, warning, and unknown. During data processing, the Chinese character strings may be processed as corresponding features. The alarm severity levels are progressive and need to be separately encoded. Therefore, critical, major, minor, warning, and unknown may be respectively processed as alarm severity level features 5, 4, 3, 2, and 1. Alarm events carry the alarm severity levels when being reported. It is assumed that there are four alarm events in one situation, and alarm severity levels are respectively critical, major, major, and major. In this case, alarm severity level features of the four alarm events are respectively 5, 4, 4, and 4. Codes may alternatively be in another form. This is not limited in this application.

With expansion of a network scale and an increase in various network devices, a large number of alarms of various types are generated on these network devices. This causes great pressure to the OSS. In addition to the foregoing causes, there are a plenty of unnecessary alarms such as invalid alarms and repeated alarms in the large number of alarms. Operation and maintenance personnel cannot accurately identify a fault root cause from the large number of alarms. As a result, troubleshooting efficiency is low, a large number of dispatched orders are generated, labor is wasted, and operation and maintenance costs are high. To improve the troubleshooting efficiency, a system classifies events based on a time correlation, a topology correlation, and the like, to obtain small situations. In addition, a topology graph of the alarm event sets is displayed to improve visibility of the alarm event sets and help the operation and maintenance personnel analyze root causes. After determining a root cause, the operation and maintenance personnel can mark the root cause in the topology graph and dispatch an order based on the mark. Although the topology graph improves the troubleshooting efficiency of the operation and maintenance personnel, each of the operation and maintenance personnel should have professional technical knowledge, which further restricts improvement of the troubleshooting efficiency. To further improve the troubleshooting efficiency, this application provides a method for determining a fault root cause. In the method, the first fault information is compared with the plurality of pieces of known fault information, and at least one piece of known fault information that matches the first fault information is determined from the N pieces of known fault information, so that information related to a root cause of the first fault information can be determined based on a fault root cause of the known fault information.

In this embodiment of this application, a device that determines a fault root cause is referred to as a first device.

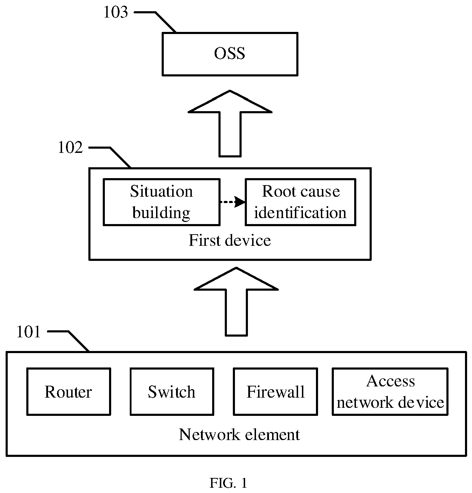

The first device may be an independent server, or may be a device having a processing capability, such as a network management device. Refer to FIG. 1. FIG. 1 is a schematic diagram of a framework according to an embodiment of this application. FIG. 1 includes a network element 101, a first device 102, and an OSS 103. The network element 101 may be a switch, a router, a firewall, a load balancing device, an access network device, or the like. The first device 102 receives alarms sent by the network elements 101, builds situations on the alarms, and aggregates at least one alarm into at least one alarm event set, to obtain first fault information. In addition, the first device 102 performs root cause identification on the first fault information, determines a fault root cause in the first fault information, and dispatches an order corresponding to the fault root cause to the OSS. It should be determined that in this embodiment of this application, situation building and root cause identification may be completed in one device, or may be completed in a plurality of devices. For example, a second device performs situation building, and sends a completed situation to the first device 102, and the first device 102 completes a step of root cause identification.

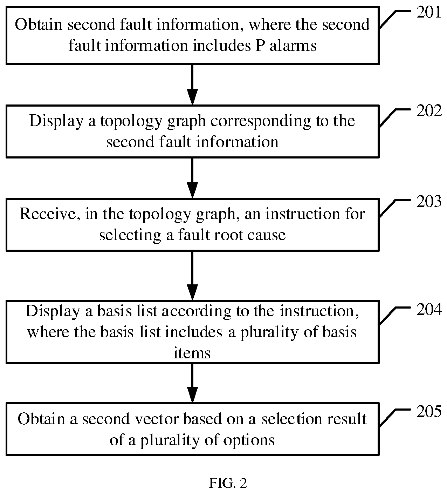

Because the first device 102 needs to match the first fault information with the N pieces of known fault information, before the first device 102 performs related matching, the first device 102 needs to obtain the N pieces of known fault information. The N pieces of known fault information include second fault information. Before processing the first fault information in this embodiment of this application is described, the following first correspondingly describes content of obtaining a second vector set corresponding to the second fault information. Refer to FIG. 2. FIG. 2 is a schematic flowchart of obtaining a second vector set according to an embodiment of this application.

In step 201, a first device obtains second fault information.

The second fault information is a situation. After obtaining a plurality of alarms sent by a network element, the first device may obtain the situation from the plurality of alarms. The second fault information includes P alarms, and P is an integer greater than or equal to 1.

In step 202, the first device displays a topology graph corresponding to the second fault information.

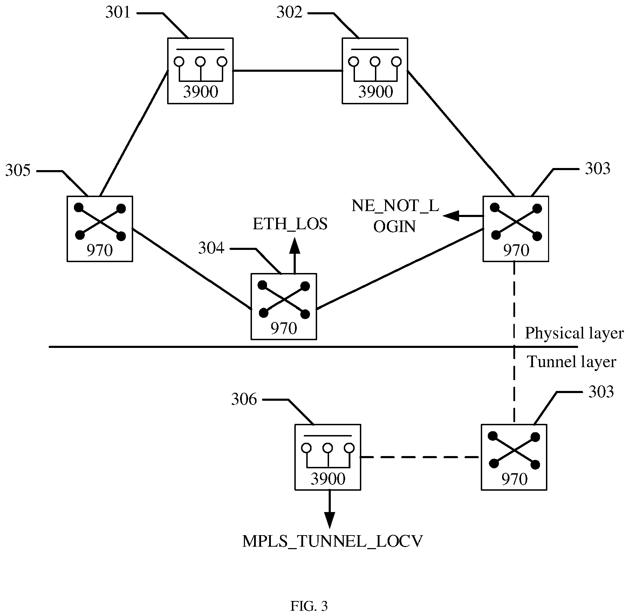

It is assumed that the second fault information includes three alarms: ETH_LOS, MPLS_TUNNEL_LOCV, and NE_NOT_LOGIN. Faults of the three alarms are mapped to a partial topology graph, and resource objects associated with the alarms are also displayed in the topology graph. These resource objects form an optional root cause mark set, including a network element, a network element port, an optical fiber/optical cable, tunnels, and the like. The partial topology graph corresponding to the second fault information is shown in FIG. 3. FIG. 3 is the topology graph corresponding to the second fault information according to this embodiment of this application. The topology graph includes a network element 301, a network element 302, ..., and a network element 306. The network element 304 reports ETH_LOS, the network element 303 reports NE_NOT_LOGIN, and the network element 306 reports MPLS_TUNNEL_LOCV. It should be noted that the network element 303 at a physical layer and the network element 303 at an application tunnel layer are the same device, and are only used to distinguish between a software fault and a hardware fault. The topology graph is merely an example. How to determine the topology graph and a manner of displaying the topology graph are not limited in this embodiment of this application. It should be noted that a network element, a board, an optical fiber, or the like related to any alarm in the second fault information should be considered as an entity related to the second fault information. For example, an entity 2 generates an alarm 1. An entity 1 related to the alarm 1 may be understood as that the entity 1 is directly connected to the entity 2, or a fault generated by the alarm 1 affects normal network communication of the entity 1. An entity related to the second fault information may be fully or partially reflected in the displayed topology graph. For example, in FIG. 3, the network element 304 does not display a board.

In step 203, the first device receives, in the topology graph, an instruction for selecting a fault root cause.

NE_NOT_LOGIN in the second fault information corresponds to the network element 303. NE_NOT_LOGIN indicates that the network element 303 is not logged in. A possible cause of a failure to log in to the network element 303 is that a user does not log in to the network element 303, or user login fails, or communication is interrupted. Assuming that after analyzing the topology graph, operation and maintenance personnel consider that the network element 303 is a root cause of the second fault information, the network element 303 may be selected as the root cause of the second fault information.

In step 204, the first device displays a basis list according to the instruction, where the basis list includes a plurality of basis items.

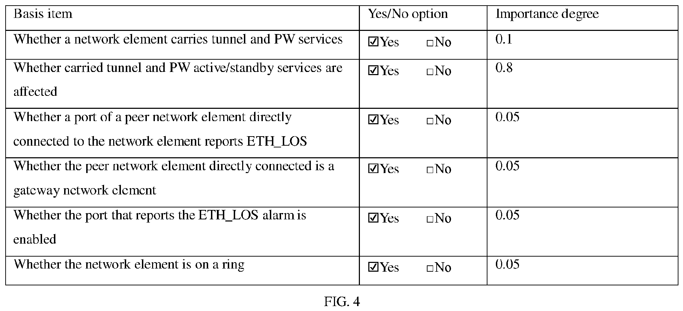

As described in step 203, it is assumed that the instruction selects the network element 303 as the root cause of the second fault information. After receiving the instruction, the first device displays the basis list. The basis list includes the plurality of basis items, and some or all features in the plurality of basis items are used to describe impact of NE_NOT_LOGIN on a network and/or a cause for generating NE_NOT_LOGIN. For ease of description, the following uses an example to describe specific content of the basis list, as shown in FIG. 4. FIG. 4 is a schematic diagram of a structure of the basis list according to this embodiment of this application. The first column in FIG. 4 specifically shows content of a basis item For example, content of a basis item 1 is whether the network element carries tunnel (tunnel) and virtual link (pseudo wire, pw) services, content of a basis item 2 is whether the carried tunnel and PW active/standby services are affected, and content of a basis item 3 is whether a peer network element directly connected is a gateway network element. Sources of the content of the basis items may be from a plurality of manners, for example, any one or more of the following two manners.

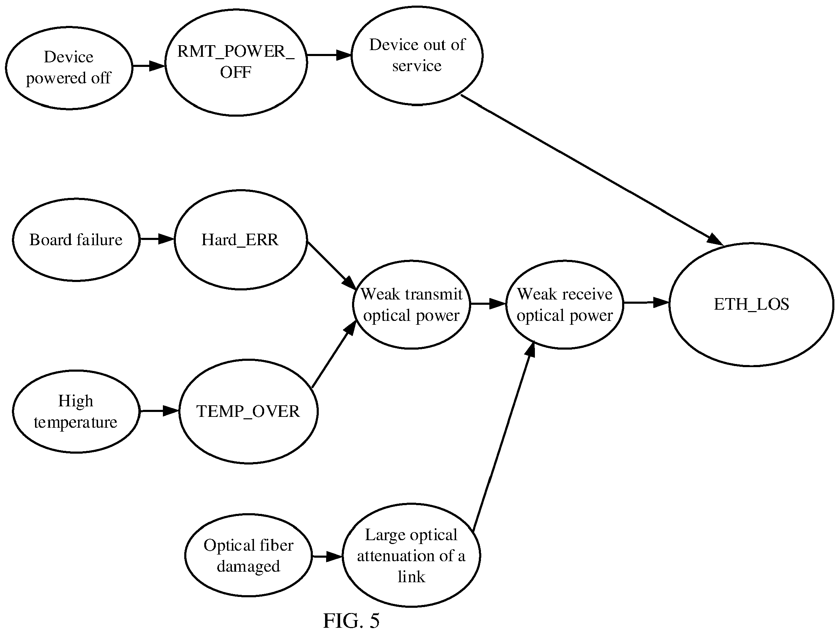

(1) A possible cause of an alarm reported by a resource. Take NE_COMMU_BREAK as an example. NE_COMMU_BREAK is an alarm indicating that a network element fails to log in to a network management system, and indicates that communication between the network element and the network management system is interrupted. If a port on the peer network element 304 of the network element 303 is disabled, the network element 303 will be unable to log in to the network management system If an optical fiber between the network element 304 and the network element 303 is interrupted or an equipment room is powered off, the network element 303 will also be unable to log in to the network management system. Take ETH_LOS as another example. ETH_LOS is a network element connection loss alarm. This alarm represents that an Ethernet port cannot receive an Ethernet signal. Refer to FIG. 5. FIG. 5 is a schematic flowchart of a possible cause for reporting ETH_LOS by a resource according to this embodiment of this application. Possible causes of ETH_LOS reported by the network element 304 include: A device is powered off. A board is faulty. A temperature is high. An optical fiber is damaged. If the network element 304 is powered off, the network element 304 reports RMT_POWER_OFF, and then is out of service and reports ETH_LOS. If the board of the network element 304 is faulty or the temperature is high, the network element 304 separately reports Hard_ERR and TEMP_OVER. As a result, transmit optical power and receive optical power of an optical module are weak, and the network element 304 reports ETH_LOS. If an optical fiber between the network element 304 and the network element 303 is damaged, optical attenuation of a link will be large. As a result, the receive optical power is weak, and the network element 304 reports ETH_LOS. Users can subscribe to and search for possible causes of an alarm by referring to an official alarm manual, as a basis item for marking.
(2) Possible impact after a resource reports an alarm. Still take NE_COMMU_BREAK as an example. After the network element 303 reports NE_COMMU_BREAK, the tunnel and PW services on one side may be affected, or all the services carried by the network element 303 may be affected. In addition, only one peer network element connected to the network element 303 may report an ETH_LOS alarm, or all the peer network elements may report ETH_LOS alarms. It should be noted that the possible impact of an alarm is queried from a lower layer to an upper layer. Horizontal query is also supported, but the query from the upper layer to the lower layer is not supported. This query mode complies with logic of generating an alarm from the lower layer to the upper layer. The upper-layer and lower-layer refer to a hierarchy, which is similar to a hierarchical architecture of a computer network. Upper-layer services are carried on lower-layer links. A first layer includes an optical fiber, a second layer includes a link carried on the optical fiber, a third layer includes a service carried on the link, such as a tunnel, and a fourth layer includes another service carried on the tunnel, such as a virtual private network (Virtual Private Network, VPN) service. The upper-layer and lower-layer are actually in a bearer relationship.

The second column in FIG. 4 includes a Yes/No option, which is used to display a selection status of a basis item corresponding to the first column. For example, for the basis item 1, in the figure, a "Yes" option is ticked, so that the selection status of the basis item 1 is "Yes". Similarly, corresponding options may also be found in the second column according to the selection status of another basis item. When content of a basis item is determined, content in the second column may be manually entered, or may be automatically entered by the first device based on collected information. For example, based on the basis item 1, the first device may query data of the network element 303, to determine whether the network element 303 carries tunnel and PW services. If the query result is "Yes", tick "Yes" in the option corresponding to the basis item 1. Further, for an option automatically entered by the first device, operation and maintenance personnel may correct the option, to improve data accuracy.

In FIG. 4, in addition to the foregoing basis item and the Yes/No option, the third column may further include an importance degree. The importance degree is used to describe a weight relationship between different Yes/No options. The importance degree is described in subsequent calculation.

A main purpose of this application is to compare the first fault information with known fault information. The known fault information includes the second fault information. However, during processing of the second fault information, the operation and maintenance personnel may be assisted to accurately determine the root cause of the second fault information to some extent. The following provides related descriptions.

In a scenario of the second fault information corresponding to FIG. 3, the network element 304 reports ETH_LOS. ETH_LOS is used to indicate that an optical fiber between the network element 304 and the network element 303 is disconnected. When the optical fiber between the network element 304 and the network element 303 is disconnected or the network element 303 that reports NE_NOT_LOGIN is powered off and out of service, a fault scenario shown in FIG. 3 is caused, that is, the corresponding resources report the alarms shown in the figure, to build the topology graph shown in FIG. 3. By building basis items, the operation and maintenance personnel can identify the root cause. For example, when the network element 303 is powered off and out of service, the tunnel and PW services that use the network element 303 as source and sink are affected, and the MPLS_TUNNEL_LOCV or MPLS_PW_LOCV alarm is reported. In a scenario where the network element 303 is not logged in due to an optical fiber disconnection, the tunnel and PW services are protected by an active/standby switching mechanism. Therefore, not all services are affected. When viewing the basis items shown in FIG. 4, the operation and maintenance personnel find that the option corresponding to the second row in the second column in FIG. 4 is "No". If the operation and maintenance personnel do not trust the option result provided by the first device, the operation and maintenance personnel may verify whether both the tunnel and PW active/standby services of the network element 303 are affected. If the operation and maintenance personnel trust the option result provided by the first device, the operation and maintenance personnel may determine, based on the option result, that the network element 303 is not the root cause of the second fault information, to modify the root cause selected in step 203. Therefore, a combination of the basis items and the Yes/No options may assist the operation and maintenance personnel in determining the root cause of the second fault information.

The foregoing further describes a possible cause for reporting ETH_LOS by the network element 304. Therefore, if the operation and maintenance personnel determine, based on the basis items, that the network element 303 is not the root cause, and reselects a port or an optical fiber between the network element 304 and the network element 303 as the root cause, the operation and maintenance personnel may determine, based on the possible cause for reporting ETH_LOS by the network element 304, whether the port or the optical fiber between the network element 304 and the network element 303 is the root cause. The possible cause for reporting ETH_LOS by the network element 304 described herein may also be understood as a basis item.

In step 205, the first device obtains a second vector based on a selection result of a plurality of options.

In the foregoing step 204, the first device displays a plurality of options corresponding to NE_NOT_LOGIN. For details, refer to FIG. 4. The first device obtains the second vector (1, 1, 1, 1, 1, 1) according to the selection result in the second column in FIG. 4, that is, the Yes/No option. If the selection result of the Yes/No option is "Yes", a value 1 is assigned. If the selection result is "No", a value 0 is assigned. Values are assigned based on an arrangement sequence of the basis items. If NE_NOT_LOGIN is not the fault root cause, that is, the network element 303 is not the root cause, the fault root cause is actually ETH_LOS, and the root cause is an optical fiber between the network element 303 and the network element 304, the second vector obtained by the first device should be (1, 0, 1, 1, 1, 1). This means that the same alarm can be represented as different vectors in different fault scenarios. Eigenvalues of the vectors are derived from the selection of basis items.

As described above, the first device obtains the second vector corresponding to the NE_NOT_LOGIN alarm. In step 202, it is assumed that the second fault information includes three alarms: ETH_LOS, MPLS_TUNNEL_LOCV and NE_NOT_LOGIN. Similarly, the first device may further obtain, by using the foregoing method, a second vector corresponding to ETH_LOS and a second vector corresponding to MPLS_TUNNEL_LOCV. A second vector set P2 is obtained based on the three second vectors:

$$P2=\begin{pmatrix} 1 & 1 & 1 & 1 & 1 & 1 \\ 1 & 0 & 1 & 1 & 0 & \text{null} \\ 0 & 0 & 0 & 1 & 1 & 1 \end{pmatrix}$$

The first row in the second vector set is the second vector corresponding to NE_NOT_LOGIN. It is assumed that the second row is the second vector corresponding to ETH_LOS, and the third row is the second vector corresponding to MPLS_TUNNEL_LOCV. It should be noted that null indicates empty, that is, there are only five basis items corresponding to ETH_LOS. Therefore, lengths of vectors in the second vector set may be different. In FIG. 4, a weight of the second vector corresponding to NE_NOT_LOGIN is further included. Herein, weights of the second vectors corresponding to the other two alarms are supplemented to form a weight matrix Q2.

$$Q1=\begin{pmatrix} 0.1 & 0.8 & 0.05 & 0.05 & 0.05 & 0.05 \\ 0.3 & 0.3 & 0.3 & 0.05 & 0.05 & \text{null} \\ 0.2 & 0.2 & 0.2 & 0.2 & 0.1 & 0.1 \end{pmatrix}$$

Each eigenvalue in Q2 corresponds to an eigenvalue at a same position in P2. For example, 0.8 in the first row and the second column in Q2 corresponds to 1 in the first row and the second column in P2. It should be noted that, to avoid repetition, this embodiment of this application does not provide descriptions of ETH_LOS and MPLS_TUNNEL_LOCV similar to those in FIG. 4. Therefore, content in the second row and the third row in Q2 is assumed.

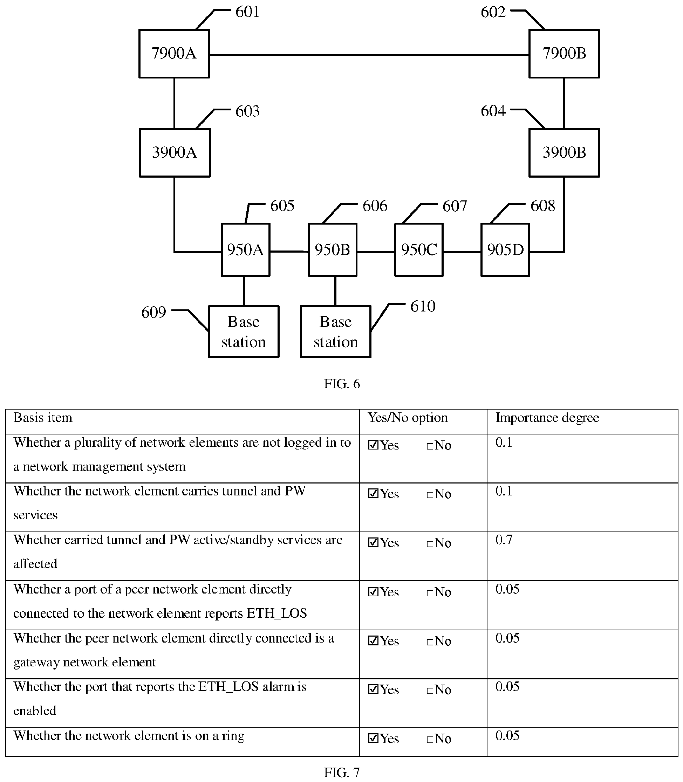

Optionally, in addition to the basis list shown in FIG. 4, in an actual application, a basis list may further include a basis item "Whether an alarm that is the same as the selected alarm exists". Refer to FIG. 6. FIG. 6 is a topology graph according to an embodiment of this application. FIG. 6 includes network elements 601 to 608, a base station 609, and a base station 610. In a scenario shown in FIG. 6, when the network element 605 is powered off and out of service, the NE_NOT_LOGIN alarm is generated on the four network elements: the network element 605, the network element 606, the network element 607, and the network element 608. That is, the NE_NOT_LOGIN alarm corresponds to four resource objects. In this case, a relationship that one alarm corresponds to a plurality of resource objects is mapped to a basis list, and extension and modification may be performed based on a second vector obtained when one alarm corresponds to one resource object. For example, in the original basis list shown in FIG. 5, a basis item "Whether multiple network elements are not logged in to the network management system" is added. If a selection result of this basis item is 0, it indicates that only one NE_NOT_LOGIN alarm exists. If the selection result of this basis item is 1, it indicates that a plurality of NE_NOT_LOGIN alarms exist. For a specific basis list, refer to FIG. 7. FIG. 7 is a schematic diagram of another structure of a basis list according to an embodiment of this application. In the scenario in FIG. 6, according to a selection result in the second column in FIG. 7, the first device may obtain that a second vector corresponding to NE_NOT_LOGIN is (1, 1, 1, 1, 1, 1, 1). In the scenario in FIG. 4, according to the selection result in the second column in FIG. 7, the first device may obtain that a second vector corresponding to NE_NOT_LOGIN is (0, 1, 1, 1, 1, 1, 1). It should be noted that specific text expressions based on the content of the basis items are not limited in this application, provided that meanings of the expressions are similar. In addition, the basis items in the basis list in FIG. 7 do not necessarily include all the basis items in the basis list shown in FIG. 5. For example, the last basis item in FIG. 7 may be deleted, to obtain a basis list with only six basis items. According to the basis item "Whether an alarm that is the same as the selected alarm exists", accuracy of a method for determining a fault root cause in this embodiment of this application is improved in a scenario in which one alarm corresponds to a plurality of resource objects.

The foregoing describes processing of the second fault information. The second fault information belongs to one piece of fault information in the N pieces of known fault information. To avoid repetition, for processing of fault information other than the second fault information, reference may be made to the foregoing process of processing the second fault information. Since then, the first device obtains the N pieces of known fault information. Based on this, after obtaining the first fault information, the first device determines, according to the N pieces of known fault information, information related to the root cause of the first fault information. The following provides corresponding descriptions. The information related to the root cause of the first fault information may be the root cause of the first fault information, or may be a fault root cause of the first fault information.

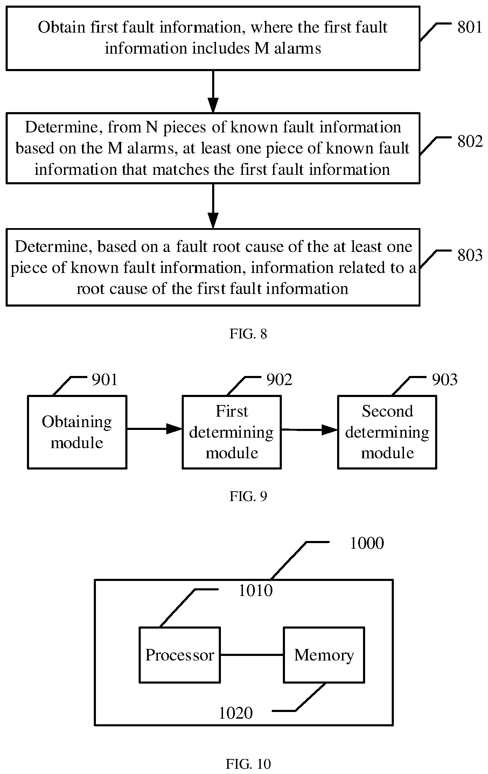

Refer to FIG. 8. FIG. 8 is a schematic flowchart of determining a fault root cause according to an embodiment of this application.

In step 801, the first device obtains the first fault information, where the first fault information includes M alarms. For this step, refer to the description of step 201 in FIG. 2. P and M may be the same, or may be different. In the foregoing description, it is assumed that P is equal to 3, and herein, it is assumed that M is equal to 2.

In step 802, the first device determines, from the N pieces of known fault information based on the M alarms, at least one piece of known fault information that matches the first fault information.

Herein, it may be understood as a process of matching the first fault information with the N pieces of known fault information. For ease of description, a process of matching the second fault information and the first fault information is described herein. For a process of matching another piece of the known fault information and the first fault information, refer to the process of matching the second fault information and the first fault information. It is assumed that the first fault information includes two alarms: ETH_LOS and NE_NOT_LOGIN. For the topology graph corresponding to the first fault information, refer to the physical layer part in FIG. 3. Certainly, when the physical layer of the topology graph corresponding to the first fault information is different from the physical layer of the topology graph corresponding to the second fault information, determining the root cause of the first fault information by using the method for determining a fault root cause in this embodiment of this application is not affected.

To determine whether the first fault information matches the second fault information, the first device needs to obtain a first vector set P1.

To obtain the P1, a first vector corresponding to ETH_LOS and a first vector corresponding to NE_NOT_LOGIN need to be obtained. An example in which the first vector corresponding to NE_NOT_LOGIN is obtained is used for description herein. In this embodiment of this application, a plurality of basis items corresponding to alarms of a same type may be the same. If an alarm type of NE_NOT_LOGIN in the first fault information is the same as that of NE_NOT_LOGIN in the second fault information, the plurality of basis items may be shared. For a schematic diagram of a structure of a basis list corresponding to NE_NOT_LOGIN in the first fault information, refer to FIG. 4. It should be noted that, although the plurality of basis items of the two NE_NOT_LOGIN alarms are the same, selection results in the second column in FIG. 4 may be different in different situations. For example, for the second fault information, a selection result in the second column and the fourth row of the basis list corresponding to NE_NOT_LOGIN is "Yes", but for the first fault information, a selection result in the second column and the fourth row of the basis list corresponding to NE_NOT_LOGIN is "No". It is assumed that a first vector corresponding to NE_NOT_LOGIN in the first fault information is (1, 1, 1, 0, 1, 1). If the selection result of the Yes/No option is "Yes", a value 1 is assigned. If the selection result is "No", a value 0 is assigned. Values are assigned based on an arrangement sequence of the basis items. It should be noted that, the first vector may be automatically obtained through information collected by the first device, or may be obtained by displaying the basis list and receiving the selection result of the Yes/No option entered by the operation and maintenance personnel. Up to now, the first device obtains the first vector corresponding to NE_NOT_LOGIN in the first fault information. Similarly, the first device obtains the first vector corresponding to ETH_LOS in the first fault information. After obtaining the first vectors of all the alarms in the first fault information, the first device obtains the first vector set P1:

$$P1=\begin{pmatrix} 1 & 1 & 1 & 0 & 1 & 1 \\ 1 & 1 & 1 & 1 & 0 & null \\ null & null & null & null & null & null \end{pmatrix}$$

The first row in the first vector set is the first vector corresponding to NE_NOT_LOGIN. It is assumed that the second row is the first vector corresponding to ETH_LOS, and the third row is the first vector corresponding to MPLS_TUNNEL_LOCV. Because the first fault information does not include MPLS_TUNNEL_LOCV, in P1, an eigenvalue in the third row is null.

In step 205 in FIG. 2, the first device obtains P2 corresponding to the second fault information. After obtaining P1 and P2, the first device calculates a similarity between the first fault information and the second fault information by using P1 and P2. A specific formula is as follows: $similarity(P1, P2) = \frac{\sum_{i=1}^{n} W_i(\sum_{j=0}^{m-1} w_i^j * a_i^j * a_i'^j)}{z}$ similarity(P1, P2) indicates that the obtained similarity between P1 and P2. n indicates a larger value between a quantity of alarms in the first fault information and a quantity of alarms in the second fault information. For example, in this embodiment of this application, the first fault information includes two alarms, and the second fault information includes three alarms. Therefore, n is 3. n may also be understood as a quantity of rows in P1 or P2. m is a quantity of basis items in the basis list, or is a quantity of eigenvalues in each row in P1. For example, in P1, m for the first row is 6, and m for the second row is 5. $w_i^j$ is a weight value based on an importance degree in the basis list. For details, refer to the foregoing Q1. $W_i$ indicates severity of an alarm. $a_i^j$ indicates a $j^{th}$ eigenvalue of an $i^{th}$ alarm in P1. $a_i'^j$ indicates a $j^{th}$ eigenvalue of an $i^{th}$ alarm in P2, used to represent the $j^{th}$ attribute eigenvalue of the $i^{th}$ alarm. Z indicates a quantity of alarms selected during the similarity calculation of two pieces of fault information. These variables vary according to fault scenarios. A value of Z can comply with the following rules:

(1) Z is increased by 1 as long as one of the same rows of the two vector sets is not null.
(2) When the same row of the two vector sets is null, Z is not processed.

By using the foregoing formula, the first device obtains the similarity between the first fault information and the second fault information similarity(P1, P2). By using a similar method, the first device may obtain N-1 similarities between the first fault information and other N-1 pieces of known fault information. It should be noted that the algorithm for calculating the similarity between the first fault information and the second fault information is described herein only as an example. In an actual application, a person skilled in the art may use another similarity algorithm, or make a modification according to a requirement. For example, $W_i$ or Q1 may not be used. For another example, the vector sets P1 and P2 are not required, and calculation is performed only in a form of a vector. For another example, the first vector is not encoded by using 1 and 0, but is encoded by using another value.

It can be seen from the foregoing calculation formula that, the similarity calculation depends only on the first vector and the second vector, and is irrelevant to a specific fault scenario. Therefore, the algorithm has high universality and robustness. In addition, even if P1 does not have a vector related to MPLS_TUNNEL_LOCV, that is, the first fault information does not have MPLS_TUNNEL_LOCV, provided that P1 matches P2, the first device can still determine, based on subsequent descriptions, the information related to the root cause of the first fault information.

Therefore, the first device obtains N similarities between the first fault information and the N pieces of known fault information. The first device performs subsequent processing in any one of the following manners.

(1) The first device selects, from the N similarities, known fault information that is most similar to the first fault information as the fault information that matches the first fault information.
(2) The first device selects, from the N similarities, at least one piece of known fault information whose similarity to the first fault information exceeds a predetermined value as the fault information that matches the first fault information.

In step 803, the first device determines, based on a fault root cause of the at least one piece of known fault information, the information related to the root cause of the first fault information.

In the foregoing step 802, the first device determines one or more pieces of known fault information that match the first fault information. The following describes how the first device determines the information related to the root cause of the first fault information from the one or more pieces of known fault information.

If the first fault information matches a plurality of pieces of known fault information, the first device may display a plurality of pieces of candidate information corresponding to the plurality of pieces of known fault information, for example, as shown in Table 1, the first device determines that the first fault information matches two pieces of known fault information: known fault information A and known fault information B. A fault root cause of the known fault information A is ETH_LOS, a root cause is a port A, and a similarity to the first fault information is 0.87. The first device displays the two pieces of candidate information to the operation and maintenance personnel for selection. The operation and maintenance personnel select a piece of candidate information based on the candidate information and the operation and maintenance personnel's judgment. The selection operation is root cause selection information for the first device. After the first device receives the root cause selection information, the first device obtains the selected known fault information that matches the first fault information.

**Table 1**

| Fault information name | Fault root cause | Root cause | Similarity |
|---|---|---|---|
| Known fault information A | NE_NOT_LOGIN | Network element A | 0.87 |
| Known fault information B | MPLS_TUNNEL_LOCV | Tunnel layer of network element B | 0.85 |

If the first fault information matches a piece of known fault information, the piece of known fault information is selected known fault information that matches the first fault information by default. For ease of description, the piece of known fault information is referred to as target known fault information herein. The following describes how to determine information related to the root cause of the first fault information based on the target known fault information.

It can be learned from the foregoing description that the target fault information corresponds to one fault root cause and one root cause, for example, the fault root cause of the second fault information is NE_NOT_LOGIN, and the root cause is the network element 303. For ease of description, it is assumed herein that the target fault information is the second fault information. If the first fault information also includes an alarm of a same type as NE_NOT_LOGIN, the first device determines that a fault root cause of the first fault information is NE_NOT_LOGIN, and a root cause is a network element corresponding to NE_NOT_LOGIN. If the first fault information does not include NE_NOT_LOGIN, the first device may compare a topology graph of the first fault information with a topology graph of the target fault information, obtain, from the topology graph of the first fault information, a network element corresponding to the network element 303, and use the network element as the root cause of the first fault information. In this case, the first fault information does not have a fault root cause, but has only a root cause. In addition, because the network element is the root cause of the first fault information, the network element is related to one or more alarms in the first fault information.

The foregoing describes the method for determining a fault root cause in the embodiments of this application. It should be noted that the foregoing different steps may be performed in different devices. For example, the steps of obtaining P1 and P2 may be performed in different devices, or the N pieces of known fault information is obtained by different devices. The following describes an apparatus for determining a fault root cause in an embodiment of this application. Refer to FIG. 9. FIG. 9 is a schematic diagram of a structure of an apparatus for determining a fault root cause according to an embodiment of this application.

The apparatus includes: an obtaining module 901, configured to obtain first fault information, where the first fault information includes M alarms, and M is an integer greater than or equal to 1;

a first determining module 902, configured to determine, from N pieces of known fault information based on the M alarms, at least one piece of known fault information that matches the first fault information, where each of the N pieces of known fault information includes a plurality of alarms, and N is an integer greater than or equal to 2; and a second determining module 903, configured to determine, based on a fault root cause of the at least one piece of known fault information, information related to a root cause of the first fault information.

In an optional design, the first determining unit 902 is specifically configured to determine, based on the M alarms in the first fault information and P alarms in first known fault information, a first similarity between the first fault information and the first known fault information, where the first known fault information is included in the N pieces of known fault information, and P is an integer greater than or equal to 1; the first determining unit 902 is specifically configured to calculate, based on a method for determining the first similarity, N-1 similarities between the first fault information and each of remaining N-1 pieces of known fault information in the N pieces of known fault information; and the first determining unit 902 is specifically configured to determine, based on the first similarity and the N-1 similarities, at least one piece of known fault information that matches the first fault information.

In an optional design, the first determining unit 902 is specifically configured to obtain a first vector set corresponding to the first fault information, where the first vector set includes M first vectors, the M first vectors are in a one-to-one correspondence with the M alarms, and some or all features of each of the M first vectors are used to represent impact of one of the M alarms on a network and/or a cause for generating the alarm; and the first determining unit 902 is specifically configured to obtain the first similarity between the first vector set and a second vector set, where the second vector set includes P first vectors, and the P first vectors are in a one-to-one correspondence with the P alarms. In an optional design, the at least one piece of known fault information that matches the first fault information includes: known fault information that is of the N pieces of known fault information and that is most similar to the first fault information; or at least one piece of known fault information that is of the N pieces of known fault information and whose similarity to the first fault information exceeds a predetermined value.

In an optional design, the second determining unit 903 is specifically configured to determine, based on the fault root cause of the at least one piece of known fault information, the root cause of the first fault information; or the second determining unit 903 is specifically configured to determine, based on the fault root cause of the at least one piece of known fault information, whether an entity related to an alarm in the first fault information is the root cause of the first fault information.

In an optional design, a type of an alarm corresponding to the fault root cause of the at least one piece of known fault information is the same as a type of an alarm corresponding to the root cause of the first fault information.

In an optional design, when the at least one piece of known fault information that matches the first fault information is a plurality of pieces of known fault information, the second determining unit 903 is specifically configured to determine a plurality of pieces of candidate information that are respectively corresponding to the plurality of pieces of known fault information and that are related to the root cause of the first fault information; the second determining unit 903 is specifically configured to receive root cause selection information; and the second determining unit 903 is specifically configured to determine, from the plurality of pieces of candidate information based on the root cause selection information, the information related to the root cause of the first fault information.

The foregoing describes the apparatus for determining a fault root cause in the embodiments of this application. The following describes a device for determining a fault root cause in the embodiments of this application.

Refer to FIG. 10. FIG. 10 is a schematic diagram of a structure of a device for determining a fault root cause according to an embodiment of this application.

A device 1000 for determining a fault root cause includes a memory 1020 and a processor 1010. The device 1000 for determining a fault root cause may be the first device shown in FIG. 2 and/or FIG. 8. The processor 1010 may be an application-specific integrated circuit (application-specific integrated circuit, ASIC), a digital signal processor (digital signal processor, DSP), another chip with a specific processing function, for example, a baseband chip, or any combination thereof. The processor 1010 may be one processor, or may include a plurality of processors.

The memory 1020 may be disposed inside the processor 1010, or may be disposed outside the processor 1010. The memory 1020 stores the following elements: an executable module or a data structure, or a subset thereof, or an extended set thereof: operation instructions, including various operation instructions, used to implement various operations; and an operating system, including various system programs used to implement various basic services and process a hardware-based task. The processor 1010 is configured to implement, according to the operation instructions, all or some operations that can be performed by the first device in any one of FIG. 2 and FIG. 8.

Specifically, the memory 1020 stores N pieces of known fault information.

The processor 1010 is configured to: obtain first fault information, where the first fault information includes M alarms, and M is an integer greater than or equal to 1; determine, from the N pieces of known fault information based on the M alarms, at least one piece of known fault information that matches the first fault information, where each of the N pieces of known fault information includes a plurality of alarms, and N is an integer greater than or equal to 2; and determine, based on a fault root cause of the at least one piece of known fault information, information related to a root cause of the first fault information.

In an optional design, the processor 1010 is specifically configured to: determine, based on the M alarms in the first fault information and P alarms in first known fault information, a first similarity between the first fault information and the first known fault information, where the first known fault information is included in the N pieces of known fault information, and P is an integer greater than or equal to 1; calculate, based on a method for determining the first similarity, N-1 similarities between the first fault information and each of remaining N-1 pieces of known fault information in the N pieces of known fault information; and determine, based on the first similarity and the N-1 similarities, at least one piece of known fault information that matches the first fault information.

In an optional design, the processor 1010 is specifically configured to obtain a first vector set corresponding to the first fault information, where the first vector set includes M first vectors, the M first vectors are in a one-to-one correspondence with the M alarms, and some or all features of each of the M first vectors are used to represent impact of one of the M alarms on a network and/or a cause for generating the alarm; and obtain the first similarity between the first vector set and a second vector set, where the second vector set includes P first vectors, and the P first vectors are in a one-to-one correspondence with the P alarms.

In an optional design, the at least one piece of known fault information that matches the first fault information includes: known fault information that is of the N pieces of known fault information and that is most similar to the first fault information; or at least one piece of known fault information that is of the N pieces of known fault information and whose similarity to the first fault information exceeds a predetermined value.

In an optional design, the processor 1010 is specifically configured to determine, based on the fault root cause of the at least one piece of known fault information, the root cause of the first fault information; or the processor 1010 is specifically configured to determine, based on the fault root cause of the at least one piece of known fault information, whether an entity related to an alarm in the first fault information is the root cause of the first fault information.

In an optional design, a type of an alarm corresponding to the fault root cause of the at least one piece of known fault information is the same as a type of an alarm corresponding to the root cause of the first fault information.

In an optional design, when the at least one piece of known fault information that matches the first fault information is a plurality of pieces of known fault information, the processor 1010 is specifically configured to determine a plurality of pieces of candidate information that are respectively corresponding to the plurality of pieces of known fault information and that are related to the root cause of the first fault information; receive root cause selection information; and determine, from the plurality of pieces of candidate information based on the root cause selection information, the information related to the root cause of the first fault information.

In the several embodiments provided in this application, it should be understood that the disclosed system, apparatus, and method may be implemented in another manner. For example, the described apparatus embodiment is merely an example. For example, division into units is merely logical function division and may be other division during actual implementation. For example, a plurality of units or components may be combined or integrated into another system, or some features may be ignored or may not be performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a flash drive, a removable hard disk, a ROM, a RAM, a magnetic disk, or an optical disc.

**Claims**

1. A method for determining a fault root cause, comprising:

   obtaining first fault information, wherein the first fault information comprises M alarms, and M is an integer greater than or equal to 1;
   determining, from N pieces of known fault information based on the M alarms, at least one piece of known fault information that matches the first fault information, wherein each of the N pieces of known fault information comprises a plurality of alarms, and N is an integer greater than or equal to 2; and
   determining, based on a fault root cause of the at least one piece of known fault information, information related to a root cause of the first fault information.

2. The method according to claim 1, wherein the determining, from N pieces of known fault information based on the plurality of alarms, at least one piece of known fault information that matches the first fault information, wherein each of the N pieces of known fault information comprises a plurality of alarms comprises:

   determining, based on the M alarms in the first fault information and P alarms in first known fault information, a first similarity between the first fault information and the first known fault information, wherein the first known fault information is comprised in the N pieces of known fault information, and P is an integer greater than or equal to 1;

calculating, based on a method for determining the first similarity, N-1 similarities between the first fault information and each of remaining N-1 pieces of known fault information in the N pieces of known fault information; and determining, based on the first similarity and the N-1 similarities, at least one piece of known fault information that matches the first fault information.

3. The method according to claim 2, wherein the determining, based on the M alarms in the first fault information and P alarms in first known fault information, a first similarity between the first fault information and the first known fault information comprises:

   obtaining a first vector set corresponding to the first fault information, wherein the first vector set comprises M first vectors, the M first vectors are in a one-to-one correspondence with the M alarms, and some or all features of each of the M first vectors are used to represent impact of one of the M alarms on a network and/or a cause for generating the alarm; and
   obtaining the first similarity between the first vector set and a second vector set, wherein the second vector set comprises P second vectors, and the P second vectors are in a one-to-one correspondence with the P alarms.

4. The method according to any one of claims 1 to 3, wherein the at least one piece of known fault information that matches the first fault information comprises:

   known fault information that is of the N pieces of known fault information and that is most similar to the first fault information; or
   at least one piece of known fault information that is of the N pieces of known fault information and whose similarity to the first fault information exceeds a predetermined value.

5. The method according to any one of claims 1 to 4, wherein the determining, based on a fault root cause of the at least one piece of known fault information, information related to a root cause of the first fault information comprises:

   determining, based on the fault root cause of the at least one piece of known fault information, the root cause of the first fault information; or
   determining, based on the fault root cause of the at least one piece of known fault information, whether an entity related to an alarm in the first fault information is the root cause of the first fault information.

6. The method according to claim 5, wherein a type of an alarm corresponding to the fault root cause of the at least one piece of known fault information is the same as a type of an alarm corresponding to the root cause of the first fault information.

7. The method according to any one of claims 1 to 6, wherein when the at least one piece of known fault information that matches the first fault information is a plurality of pieces of known fault information, the determining, based on a fault root cause of the at least one piece of known fault information, information related to a root cause of the first fault information comprises:

   determining a plurality of pieces of candidate information that are respectively corresponding to the plurality of pieces of known fault information and that are related to the root cause of the first fault information;
   receiving root cause selection information; and
   determining, from the plurality of pieces of candidate information based on the root cause selection information, the information related to the root cause of the first fault information.

8. An apparatus for determining a fault root cause, comprising:

   an obtaining module, configured to obtain first fault information, wherein the first fault information comprises M alarms, and M is an integer greater than or equal to 1;
   a first determining module, configured to determine, from N pieces of known fault information based on the M alarms, at least one piece of known fault information that matches the first fault information, wherein each of the N pieces of known fault information comprises a plurality of alarms, and N is an integer greater than or equal to 2; and
   a second determining module, configured to determine, based on a fault root cause of the at least one piece of known fault information, information related to a root cause of the first fault information.

9. The apparatus according to claim 8, wherein

the first determining unit is specifically configured to determine, based on the M alarms in the first fault information and P alarms in first known fault information, a first similarity between the first fault information and the first known fault information, wherein the first known fault information is comprised in the N pieces of known fault information, and P is an integer greater than or equal to 1;
the first determining unit is specifically configured to calculate, based on a method for determining the first similarity, N-1 similarities between the first fault information and each of remaining N-1 pieces of known fault information in the N pieces of known fault information; and
the first determining unit is specifically configured to determine, based on the first similarity and the N-1 similarities, at least one piece of known fault information that matches the first fault information.

10. The apparatus according to claim 9, wherein

the first determining unit is specifically configured to obtain a first vector set corresponding to the first fault information, wherein the first vector set comprises M first vectors, the M first vectors are in a one-to-one correspondence with the M alarms, and some or all features of each of the M first vectors are used to represent impact of one of the M alarms on a network and/or a cause for generating the alarm; and
the first determining unit is specifically configured to obtain the first similarity between the first vector set and a second vector set, wherein the second vector set comprises P second vectors, and the P second vectors are in a one-to-one correspondence with the P alarms.

11. The apparatus according to any one of claims 8 to 10, wherein the at least one piece of known fault information that matches the first fault information comprises:

known fault information that is of the N pieces of known fault information and that is most similar to the first fault information; or
at least one piece of known fault information that is of the N pieces of known fault information and whose similarity to the first fault information exceeds a predetermined value.

12. The apparatus according to any one of claims 8 to 11, wherein

the second determining unit is specifically configured to determine, based on the fault root cause of the at least one piece of known fault information, the root cause of the first fault information; or
the second determining unit is specifically configured to determine, based on the fault root cause of the at least one piece of known fault information, whether an entity related to an alarm in the first fault information is the root cause of the first fault information.

13. The apparatus according to claim 12, wherein a type of an alarm corresponding to the fault root cause of the at least one piece of known fault information is the same as a type of an alarm corresponding to the root cause of the first fault information.

14. The apparatus according to any one of claims 8 to 13, wherein when the at least one piece of known fault information that matches the first fault information is a plurality of pieces of known fault information:

the second determining unit is specifically configured to determine a plurality of pieces of candidate information that are respectively corresponding to the plurality of pieces of known fault information and that are related to the root cause of the first fault information;
the second determining unit is specifically configured to receive root cause selection information; and
the second determining unit is specifically configured to determine, from the plurality of pieces of candidate information based on the root cause selection information, the information related to the root cause of the first fault information.

15. A device for determining a fault root cause, wherein the device comprises a processor and a memory, and the memory stores N pieces of known fault information;

the processor is configured to obtain first fault information, wherein the first fault information comprises M alarms, and M is an integer greater than or equal to 1;

the processor is further configured to determine, from the N pieces of known fault information based on the M alarms, at least one piece of known fault information that matches the first fault information, wherein each of the N pieces of known fault information comprises a plurality of alarms, and N is an integer greater than or equal to 2; and

the processor is further configured to determine, based on a fault root cause of the at least one piece of known fault information, information related to a root cause of the first fault information.

16. A computer storage medium, wherein the computer storage medium stores instructions, and when the instructions are executed on a computer, the computer is enabled to perform the method according to any one of the implementations of claims 1 to 7.

17. A computer program product, wherein when the computer program product is executed on a computer, the computer is enabled to perform the method according to any one of the implementations of claims 1 to 7.

103 — OSS

102 — 

| Situation building | ⇢ | Root cause identification |

First device

101 — 

| Router | Switch | Firewall | Access network device |

Network element

FIG. 1

Obtain second fault information, where the second fault information includes P alarms — 201

Display a topology graph corresponding to the second fault information — 202

Receive, in the topology graph, an instruction for selecting a fault root cause — 203

Display a basis list according to the instruction, where the basis list includes a plurality of basis items — 204

Obtain a second vector based on a selection result of a plurality of options — 205

FIG. 2

301  302

3900  3900

305  303

NE_NOT_L
OGIN

ETH_LOS

304

970

970

970

Physical layer

Tunnel layer

306  303

3900

970

MPLS_TUNNEL_LOCV

FIG. 3

| Basis item | Yes/No option | | Importance degree |
|---|---|---|---|
| Whether a network element carries tunnel and PW services | ☑Yes | □No | 0.1 |
| Whether carried tunnel and PW active/standby services are affected | ☑Yes | □No | 0.8 |
| Whether a port of a peer network element directly connected to the network element reports ETH_LOS | ☑Yes | □No | 0.05 |
| Whether the peer network element directly connected is a gateway network element | ☑Yes | □No | 0.05 |
| Whether the port that reports the ETH_LOS alarm is enabled | ☑Yes | □No | 0.05 |
| Whether the network element is on a ring | ☑Yes | □No | 0.05 |

FIG. 4

FIG. 5

FIG. 6

| Basis item | Yes/No option | Importance degree |
|---|---|---|
| Whether a plurality of network elements are not logged in to a network management system | ☑Yes　　□No | 0.1 |
| Whether the network element carries tunnel and PW services | ☑Yes　　□No | 0.1 |
| Whether carried tunnel and PW active/standby services are affected | ☑Yes　　□No | 0.7 |
| Whether a port of a peer network element directly connected to the network element reports ETH_LOS | ☑Yes　　□No | 0.05 |
| Whether the peer network element directly connected is a gateway network element | ☑Yes　　□No | 0.05 |
| Whether the port that reports the ETH_LOS alarm is enabled | ☑Yes　　□No | 0.05 |
| Whether the network element is on a ring | ☑Yes　　□No | 0.05 |

FIG. 7

```
┌─────────────────────────────────────────────────────┐
│   Obtain first fault information, where the first     │ ⌐ 801
│   fault information includes M alarms                  │
└─────────────────────────────────────────────────────┘
                         │
                         ▼
┌─────────────────────────────────────────────────────┐
│   Determine, from N pieces of known fault information │ ⌐ 802
│   based on the M alarms, at least one piece of known   │
│   fault information that matches the first fault        │
│   information                                          │
└─────────────────────────────────────────────────────┘
                         │
                         ▼
┌─────────────────────────────────────────────────────┐
│   Determine, based on a fault root cause of the at     │ ⌐ 803
│   least one piece of known fault information,          │
│   information related to a root cause of the first     │
│   fault information                                    │
└─────────────────────────────────────────────────────┘
```

FIG. 8

```
      ⌐ 901                ⌐ 902                 ⌐ 903
┌──────────────┐    ┌──────────────┐    ┌──────────────┐
│              │    │    First      │    │   Second      │
│  Obtaining    │──▶ │ determining   │──▶ │ determining   │
│  module       │    │ module        │    │ module        │
└──────────────┘    └──────────────┘    └──────────────┘
```

FIG. 9

```
                               ⌐ 1000
┌───────────────────────────────────────────┐
│            ⌐ 1010                           │
│  ┌──────────────┐      ┌──────────────┐     │
│  │  Processor    │──────│   Memory      │    │
│  └──────────────┘      └──────────────┘     │
│                            1020 ⌐            │
└───────────────────────────────────────────┘
```

FIG. 10

## INTERNATIONAL SEARCH REPORT

| International application No. |
|---|
| **PCT/CN2021/107015** |

| A. | CLASSIFICATION OF SUBJECT MATTER |
|---|---|

G06F 11/07(2006.01)i

According to International Patent Classification (IPC) or to both national classification and IPC

| B. | FIELDS SEARCHED |
|---|---|

Minimum documentation searched (classification system followed by classification symbols)

G06F; H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 故障, 确定, 根因, 告警, 匹配, 对比, 相关, 相似, 向量, fault, failure, malfunction, determine, cause, root cause, match, mapping, related, associate, vector, similarity, likeness

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110309009 A (BEIJING YUNJI SMART MANUFACTURING TECHNOLOGY CO., LTD.) 08 October 2019 (2019-10-08) description, paragraphs [0004]-[0013], paragraphs [0020]-[0067] | 1-17 |
| X | CN 110609759 A (HUAWEI TECHNOLOGIES CO., LTD.) 24 December 2019 (2019-12-24) description, paragraphs [0006]-[0039] | 1-17 |
| A | CN 109597392 A (SIEMENS AG.) 09 April 2019 (2019-04-09) entire document | 1-17 |
| A | CN 108009040 A (HANGZHOU SHIQU INFORMATION TECHNOLOGY CO., LTD.) 08 May 2018 (2018-05-08) entire document | 1-17 |
| A | US 2010174945 A1 (NEC CORPORATION) 08 July 2010 (2010-07-08) entire document | 1-17 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 September 2021** | **28 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/107015**

| Patent document cited in search report | | | Publication date (day/month/year) | Patent family member(s) | | | Publication date (day/month/year) |
|---|---|---|---|---|---|---|---|
| CN | 110309009 | A | 08 October 2019 | None | | | |
| CN | 110609759 | A | 24 December 2019 | EP | 3796176 | A1 | 24 March 2021 |
| | | | | US | 2021099336 | A1 | 01 April 2021 |
| | | | | WO | 2019238109 | A1 | 19 December 2019 |
| CN | 109597392 | A | 09 April 2019 | EP | 3462265 | A1 | 03 April 2019 |
| CN | 108009040 | A | 08 May 2018 | None | | | |
| US | 2010174945 | A1 | 08 July 2010 | WO | 2008149975 | A1 | 11 December 2008 |
| | | | | JP | WO2008149975 | A1 | 26 August 2010 |

Form PCT/ISA/210 (patent family annex) (January 2015)

**REFERENCES CITED IN THE DESCRIPTION**

**Patent documents cited in the description**

- CN 202010986439